# FASCICULE DE BREVET EUROPEEN

(11) **EP 2 992 184 B1**
(45) Date de publication et mention de la délivrance du brevet: **26.01.2022**
(21) Numéro de dépôt: 14727592.9
(22) Date de dépôt: 23.04.2014
(51) Int. Cl.: F01D 25/00, F02C 7/30

(54) **DISPOSITIF DE LAVAGE DE CARTER D'ENTRÉE D'AIR DE TURBOMACHINE**
VORRICHTUNG ZUM WASCHEN EINES LUFTEINTRITTSGEHÄUSES EINER TURBOMASCHINE
DEVICE FOR WASHING A TURBOMACHINE AIR INTAKE CASING

(30) Priorité: 30.04.2013 FR 1353984
(43) Date de publication de la demande: 09.03.2016
(73) Titulaire: Safran Helicopter Engines, 64510 Bordes (FR)
(72) Inventeur: GIRARDOT, Julien, 64510 Angais (FR); CHABANNE, Pierre, 64320 Idron (FR); GOURDANT, Sylvain, Jacques, Marie, 64110 Gelos (FR); SCUILLER, Lionel, 64140 Billere (FR)
(74) Mandataire: Cabinet Beau de Loménie
(86) Numéro de dépôt international: PCT/FR2014/050987
(87) Numéro de publication internationale: WO 2014/177790

(56) Documents cités:
- EP-A2- 1 908 928
- WO-A1-91/12433
- WO-A1-2005/028119
- FR-A2- 2 174 689
- US-A1- 2010 206 966

## Description

### DOMAINE DE L'INVENTION

L'invention concerne un carter d'entrée d'air pour turbomachine, et plus particulièrement un carter d'entrée d'air équipé de buses d'injection d'agent nettoyant. L'invention concerne également une turbomachine comprenant un tel carter d'entrée d'air.

Le terme « turbomachine » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz chauds, et les turbomoteurs dans lesquels l'énergie motrice est fournie par la rotation d'un arbre moteur. Par exemple, des turbomoteurs sont utilisés comme moteur pour des hélicoptères, des navires, des trains, ou encore comme moteur industriel. Les turbopropulseurs (turbomoteur entrainant une hélice) sont également des turbomoteurs utilisés comme moteur d'avion.

### ETAT DE LA TECHNIQUE ANTERIEURE

On connait un carter d'entrée d'air de turbomachine comprenant une paroi annulaire interne et une paroi annulaire externe délimitant un conduit d'air, et au moins deux buses d'injection d'agent nettoyant. Cependant dans certaines conditions le nettoyage à l'aide de ces buses n'est pas satisfaisant de sorte qu'une intervention manuelle pour le nettoyage devient nécessaire. Une telle intervention manuelle est coûteuse et délicate.

FR 2 174 689 divulgue une turbine de détente pour récupération d'énergie de gaz chauds poussiéreux sous pression. US 2010/206966 divulgue une buse de pulvérisation.

### PRESENTATION DE L'INVENTION

Un but de l'invention est de remédier au moins substantiellement aux inconvénients mentionnés ci-avant.

L'invention atteint son but en proposant un carter d'entrée d'air de turbomachine défini par la revendication 1 et comprenant une paroi annulaire interne et une paroi annulaire externe délimitant un conduit d'air, et au moins deux buses d'injection d'agent nettoyant (dans ledit carter), dans lequel une (i.e. au moins une) première buse est orientée vers la paroi externe tandis qu'une (i.e. au moins une) seconde buse est orientée vers la paroi interne, la première et la second buse étant disposées sur la paroi interne.

On comprend que le carter d'entrée d'air de turbomachine (ci-après « le carter ») comprend une ou plusieurs première(s) buse(s), une ou plusieurs seconde(s) buse(s) et éventuellement une ou plusieurs autre(s) buse(s), par exemple une ou plusieurs troisième(s), quatrième(s), etc. buse(s).

Par la suite, et sauf précision contraire, l'expression « la première buse » désigne l'unique première buse si il n'y en a qu'une ou l'ensemble des premières buses si il y en a plusieurs. De même, l'expression « la seconde buse » désigne l'unique seconde buse si il n'y en a qu'une ou l'ensemble des secondes buses si il y en a plusieurs. Il en va de même pour la troisième, quatrième, etc. buse(s).

Bien entendu, la première buse est distincte de la seconde buse. Plus généralement, la première buse et la seconde buse sont distinctes de la troisième, quatrième, etc. buse(s).

Les buses peuvent être directement formées dans le carter, par exemple dans l'épaisseur de la paroi annulaire interne. Par exemple, les buses peuvent comprendre un trou traversant ladite paroi formé par perçage classique ou par électroérosion. Selon une variante les buses sont formées par des pièces distinctes du carter, mais solidaires du carter. Bien entendu certaines buses peuvent être directement formées dans le carter tandis que d'autres buses sont formées par des pièces distinctes du carter.

On comprend également que la paroi annulaire interne, appelée également « paroi interne », est la paroi annulaire du carter d'entrée d'air délimitant le conduit d'air qui est disposée radialement le plus près de l'axe du carter, au moins sur une portion axiale du carter. Inversement, la paroi annulaire externe également appelée « paroi externe », est la paroi annulaire du carter délimitant le conduit d'air qui est la plus éloignée radialement de l'axe du carter, au moins sur une portion axiale du carter.

De manière générale la direction radiale est une direction perpendiculaire à l'axe (ou direction axiale) du carter. La direction azimutale correspond à la direction décrivant un anneau autour de la direction axiale. Les trois directions axiale, radiale et azimutale correspondent respectivement aux directions définies par la côte, le rayon et l'angle dans un système de coordonnées cylindrique.

La première buse est orientée vers la paroi externe, paroi qui est la plus sensible du point de vue aérodynamique tandis que la seconde buse est orientée vers la paroi interne. On s'assure ainsi que les deux parois principales du carter délimitant le conduit d'air reçoivent directement l'agent nettoyant, ce qui assure leur nettoyage. Par ailleurs, l'injection de l'agent nettoyant est préférentiellement réalisée sous pression, entre 3 et 10 bars environ (soit 0.3 à 1.0 MPa - mégapascal). Ainsi, l'agent nettoyant qui impacte les parois annulaires est diffusé après impact dans l'air alimentant la turbomachine. Par conséquent, après impact sur les parois du carter, l'agent nettoyant est diffusé au sein de l'ensemble du carter, puis introduit en aval au sein de la turbomachine. Ainsi, toutes les zones du carter d'entrée d'air ainsi que les parois de la veine d'air au sein de la turbomachine, y compris les zones difficiles d'accès, reçoivent l'agent nettoyant et sont donc nettoyées, et ce de manière homogène. Une telle répartition homogène d'agent nettoyant permet notamment d'augmenter l'efficacité de chaque nettoyage, et donc de réduire la consommation en agent nettoyant.

Bien entendu, les buses peuvent être du type à jet concentré ou du type à jet diffus ou atomiseur. Ceci permet d'adapter le jet à la géométrie de la zone d'impact sur la paroi ainsi que la puissance d'impact du jet sur la paroi. Selon une variante, la première buse et la seconde buse sont des buses du type à jet concentré. Selon une autre variante, la première buse et la seconde buse sont des buses du type à jet concentré tandis qu'une troisième buse est du type à jet diffus.

Dans le cas de figure où le carter d'entrée d'air présente plusieurs premières buses, ces premières buses sont avantageusement disposées dans un même plan axial (i.e. plan perpendiculaire à la direction axiale du carter d'entrée d'air). De même, dans le cas de figure où le carter d'entrée d'air présente plusieurs secondes buses, ces secondes buses sont avantageusement disposées dans un même plan axial (distinct du plan axial des premières buses). On s'assure ainsi que toutes les premières buses et que toutes les secondes buses ont respectivement le même effet sur la paroi impactée par le jet qu'elles produisent.

De manière générale, au sens de l'invention, la position d'une buse au sein du carter est donnée par la position du centre géométrique de l'orifice de sortie de ladite buse. L'orifice de chacune des buses présente une forme générale circulaire, elliptique ou oblongue, mais peut bien entendu présenter toute autre forme. Bien sûr, certaines buses peuvent présenter un orifice d'une forme générale tandis que d'autres buses présentent un orifice d'une forme générale différente (en taille et/ou géométrie).

Dans le cas de figure où le carter d'entrée d'air présente plusieurs premières buses, ces premières buses sont avantageusement régulièrement réparties azimutalement. De même, dans le cas de figure où le carter d'entrée d'air présente plusieurs secondes buses, ces secondes buses sont avantageusement régulièrement réparties azimutalement. Une répartition azimutale régulière permet notamment d'améliorer l'homogénéité du nettoyage.

Selon une variante, il y a autant de premières buses que de secondes buses. Selon une autre variante, afin d'obtenir une répartition la plus homogène possible d'agent nettoyant sur la surface d'impact, il y a le même nombre de premières et de secondes buses au prorata de la surface de la paroi d'impact. En d'autre terme, le nombre de buse par unité de surface de paroi d'impact (ou densité de buse) est le même pour la première buse que pour la seconde buse. Dans cette variante, le nombre total de premières buses peut donc être différent du nombre total de secondes buses si les surfaces des parois d'impact sont différentes.

Avantageusement, le carter d'entrée d'air comprend au moins un ensemble de buses comprenant une première buse orientée vers la paroi externe et une seconde buse orientée vers la paroi interne, la première buse et la seconde buse de l'ensemble de buses étant disposées dans un même demi-plan radial du carter d'entrée d'air.

Un demi-plan radial est un demi-plan s'étendant depuis l'axe du carter d'entrée d'air selon une direction radiale (i.e. parallèlement à l'axe du carter d'entrée d'air). Ainsi, un plan radial contient deux demi-plans radiaux. Pour rappel, un plan radial est un plan parallèle à l'axe du carter et contenant l'axe du carter.

On comprend que chaque ensemble de buses comprend une première buse et une seconde buse et éventuellement une troisième et/ou quatrième, etc. buse(s). Dans le cas où l'ensemble de buses comprend une ou plusieurs autre(s) buse(s) que les première et seconde buses, la ou les autres buses peuvent être également disposées dans le même demi-plan radial que le demi-plan radial des première et seconde buses (i.e. toutes les buses sont dans un même demi-plan radial), seulement une ou plusieurs buses parmi ces autres peuvent être disposées sur ce même demi-plan radial, ou encore aucune des autres buses n'est disposée dans ce même demi-plan radial.

Une telle répartition d'une première buse et d'une seconde buse permet d'optimiser l'encombrement du circuit d'alimentation en agent nettoyant des buses.

Avantageusement, le carter comprend plusieurs premières buses régulièrement réparties azimutalement au sein dudit carter et plusieurs secondes buses régulièrement réparties azimutalement au sein dudit carter.

Avantageusement, les premières buses sont disposées dans un même plan axial. Avantageusement, les secondes buses sont disposées dans un même plan axial. Avantageusement, le plan axial des premières buses est distinct du plan axial des secondes buses.

Ces différentes configurations, prises seules ou en combinaison permettent d'optimiser l'homogénéité de diffusion d'agent nettoyant tout en présentant une structure simple.

Avantageusement, le carter d'entrée d'air comprend plusieurs ensembles de buses régulièrement répartis azimutalement au sein dudit carter.

De la même manière que précédemment, on comprend que chaque ensemble comprend une première buse, une seconde buse, et éventuellement une ou plusieurs autre(s) buse(s).

Les différents ensembles de buses sont régulièrement espacés selon la direction azimutale du carter. Ainsi, lorsque le carter présente deux ensembles de buses, ces deux ensembles sont sensiblement diamétralement opposés, lorsque le carter présente trois ensembles de buses, ces ensembles sont sensiblement espacés de 120° (cent vingt degré d'angle) les uns des autres, etc. Une telle répartition permet d'améliorer l'homogénéité du nettoyage.

Selon une variante, il y a autant de premières buses que de secondes buses, les premières et les secondes buses étant régulièrement réparties azimutalement, les premières et secondes buses étant disposées deux-à-deux (i.e. par paire comprenant une unique première buse et une unique seconde buse) dans un même demi-plan radial, toutes les premières buses étant disposées dans un même premier plan axial tandis que toutes les secondes buses sont disposées dans un même second plan axial distinct du premier plan axial.

Une telle configuration présente une complexité minime tout en permettant d'obtenir un nettoyage optimal.

Avantageusement, le carter comprend uniquement des premières buses et des secondes buses (i.e. uniquement une ou plusieurs premières buses et une ou plusieurs secondes buses).

Les inventeurs ont remarqué qu'une telle configuration est un bon équilibre entre le nombre de buses qui doit être minimum pour assurer une structure simple du carter, et l'efficacité du nettoyage qui au contraire réclame le plus de buses possibles. On optimise ainsi l'efficacité de l'agent nettoyant tout en limitant au strict nécessaire le nombre de buses.

Avantageusement, la première buse et la seconde buse sont orientées vers l'aval, l'amont et l'aval étant considérés selon le sens du flux au sein du carter d'entrée d'air de l'amont vers l'aval.

L'orientation vers l'aval de la première buse et de la seconde buse permet en outre de pouvoir nettoyer les éléments disposés en aval du carter au sein de la turbomachine, comme par exemple une grille de prérotation variable axiale (également connu sous l'acronyme IGV pour « Inlet Guide Vane »), et/ou un rouet (ou une roue) de compresseur.

Avantageusement, la première buse est disposée en amont de la seconde buse, l'amont et l'aval étant considérés selon le sens du flux au sein du carter d'entrée d'air de l'amont vers l'aval.

Cette disposition permet notamment d'éviter les interférences entre le jet de la première buse et le jet de la seconde buse.

Avantageusement, le carter d'entrée d'air forme un carter radial d'entrée d'air.

Un carter radial d'entrée d'air est un carter où l'orifice d'admission d'air est orienté sensiblement radialement tandis que l'orifice de sortie d'air est sensiblement orienté axialement. Ce type de carter est par exemple utilisé au sein des turbomoteurs d'hélicoptère.

La première buse et la seconde buse sont disposées sur la paroi interne. Cette configuration est particulièrement bien adaptée aux carters radiaux d'entrée d'air.

Avantageusement, le carter d'entrée d'air comprend un circuit d'alimentation en agent nettoyant pour alimenter les buses en agent nettoyant.

Un tel circuit d'alimentation permet de facilement alimenter les buses lors des opérations de nettoyages. Ainsi, lorsqu'on veut nettoyer le carter et/ou les parois de la veine d'air en aval du carter au sein de la turbomachine, on branche directement une pompe au circuit d'alimentation et on injecte l'agent nettoyant dans le circuit d'alimentation à l'aide de la pompe, grâce à quoi les buses produisent chacune un jet d'agent nettoyant au sein du carter. Ce circuit d'alimentation est intégré au carter. On intègre ce circuit par exemple lors de la fabrication du carter (par exemple par fonderie, les tuyauteries étant ainsi fabriquées en tout ou partie en même temps que le carter, et en une seule et même pièce) et/ou grâce à une tuyauterie en tout ou partie rapportée et solidaire du carter. En d'autres termes, le circuit d'alimentation est préinstallé sur le carter. Ainsi, lorsqu'on monte le carter au sein d'une turbomachine, le circuit d'alimentation l'est par la même occasion sans opération supplémentaire.

L'invention concerne également une turbomachine comprenant un carter d'entrée d'air selon l'invention.

Avantageusement, la turbomachine est un turbomoteur d'hélicoptère. En effet, le carter d'entrée d'air selon l'invention, et plus particulièrement le carter radial d'entrée d'air est particulièrement bien adapté aux turbomoteurs d'hélicoptère.

### BREVE DESCRIPTION DES DESSINS

L'invention et ses avantages seront mieux compris à la lecture de la description détaillée faite ci-après du mode de réalisation de l'invention donné à titre d'exemple non limitatif. Cette description fait référence aux figures annexées, sur lesquelles :
- la figure 1 représente une turbomachine selon l'invention,
- la figure 2 représente le carter d'entrée d'air de la turbomachine de la figure 1, vu en coupe axiale, et
- la figure 3 représente le carter d'entrée d'air de la turbomachine de la figure 1, vu en perspective selon la flèche III de la figure 2.

### DESCRIPTION DETAILLEE D'EXEMPLES DE REALISATION

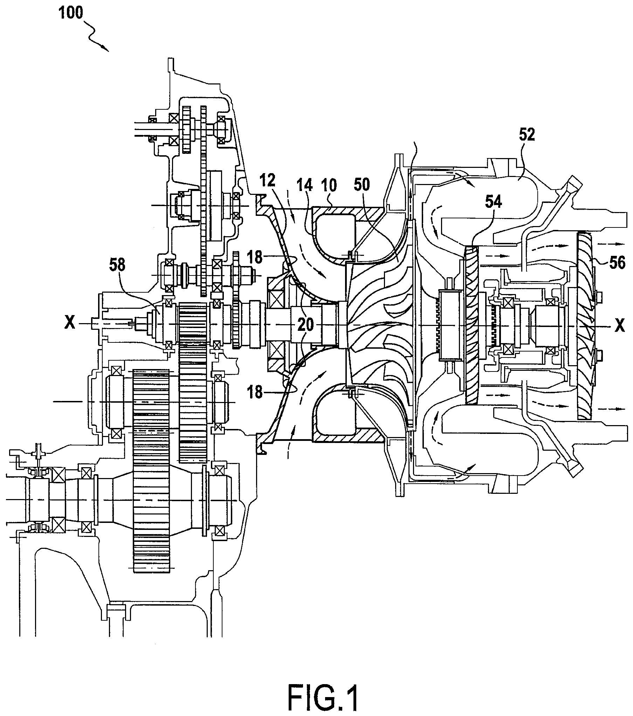

La figure 1 représente un turbomoteur d'hélicoptère 100 formant une turbomachine selon l'invention. Ce turbomoteur 100 comprend un carter d'entrée d'air 10 selon l'invention par lequel de l'air pénètre dans le turbomoteur 100. Cet air circule au sein du turbomoteur selon le sens indiqué par les flèches en traits discontinus de l'amont vers l'aval. Ainsi, après avoir été introduit dans le turbomoteur 100 via le carter 10, l'air est comprimé par un compresseur 50, puis chauffé dans la chambre de combustion 52, et détendu dans les turbines 54 et 56. La turbine 56 entraine en rotation l'arbre 58 qui fournit l'énergie motrice nécessaire à la propulsion de l'hélicoptère (non représenté). En sortie de turbine 56, l'air est expulsé vers l'extérieur du turbomoteur 100.

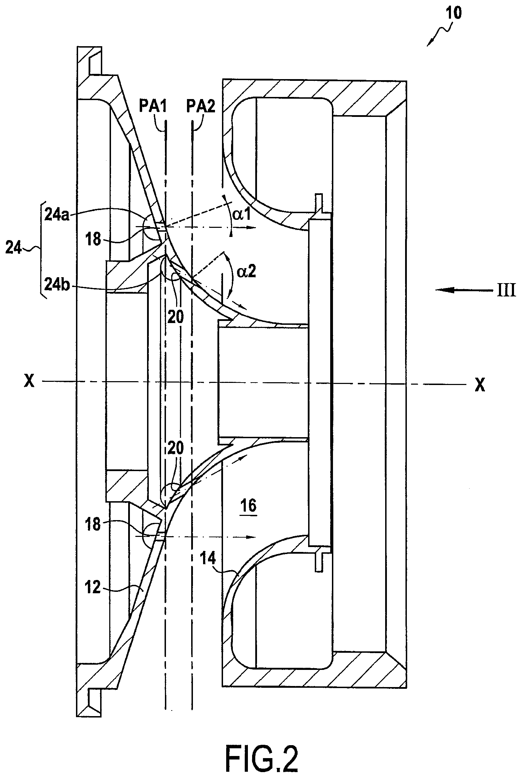

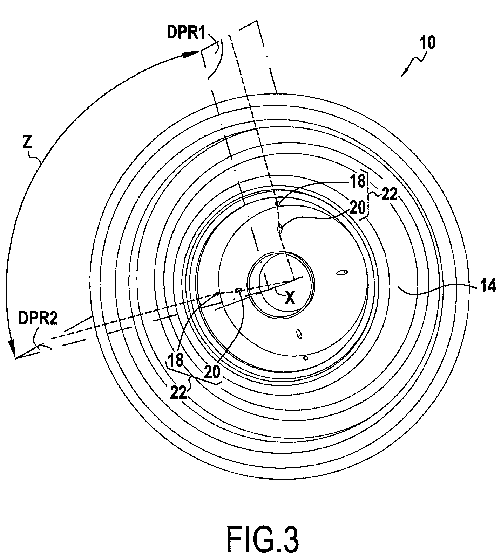

Les figures 2 et 3 représentent plus en détail le carter d'entrée d'air 10. Ce carter d'entrée d'air 10 est un carter radial d'entrée d'air. Le carter 10 s'étend selon une direction axiale X, et comprend une paroi annulaire interne 12 et une paroi annulaire externe 14. Les parois annulaires interne et externe 12 et 14 sont sensiblement concentriques et définissent un conduit d'air annulaire 16. On note que les parois interne et externe sont solidaires grâce à des entretoises s'étendant radialement dans le conduit annulaire 16, ces entretoises n'étant pas représentées pour plus de clarté. Bien entendu, selon la forme des entretoises, on peut considérer que le conduit d'air comprend un seul ou plusieurs conduits qui forment un ou plusieurs secteurs d'anneau.

La paroi interne 12 comprend des premières buses 18 orientées vers la paroi externe 14 et des secondes buses 20 orientées vers la paroi interne 12. Les flèches en traits discontinus de la figure 2 représentent l'orientation des buses et la zone impactée par le jet produit par ces buses. Les premières buses 18 sont distinctes des secondes buses 20. Dans cet exemple, le carter 10 comprend quatre premières buses 18 et quatre secondes buses 20. Bien entendu, selon une variante, la carter 10 peut comprendre un, deux, trois, au plus de quatre premières et/ou secondes buses.

Les premières buses 18 sont disposées dans un seul et même premier plan axial PA1 tandis que les secondes buses 20 sont disposées dans un seul et même second plan axial PA2, distinct du premier plan axial PA1 (cf. fig.2).

Les premières buses 18 sont régulièrement espacées selon la direction azimutale Z. Ainsi, un angle de 90° sépare les premières buses 18 adjacentes. De même, les secondes buses 20 sont régulièrement espacées selon la direction azimutale Z. Ainsi, un angle de 90° sépare les secondes buses 20 adjacentes.

Chaque première buse 18 est disposée sur un même azimut qu'une seconde buse 20. Ainsi, dans cet exemple, le carter 10 présente quatre ensembles 22 comprenant chacun une unique première buse 18 et une unique seconde buse 20, où ladite première buse 18 et ladite seconde buse 20 sont disposées dans un même demi-plan radial s'étendant radialement depuis l'axe X du carter 10. Des demi-plans radiaux DPR1 et DPR2 sont représentés sur la figure 3. Les première et seconde buses 18 et 20 d'un premier ensemble 22 dont sont disposées dans un premier demi-plan radial DPR1. De même, les première et seconde buses 18 et 20 d'un second ensemble 22 sont disposées dans un second demi-plan radial DPR2 distinct du premier demi-plan radial DPR1. Les ensembles 22 de première et seconde buses 18 et 20 sont régulièrement espacés selon la direction azimutale Z. Ainsi, un angle de 90° sépare les ensembles 22 adjacents.

Toutes les premières buses 18 ainsi que toutes les secondes buses 20 sont orientées vers l'aval du carter 10. On notera que le sens de l'écoulement du flux de l'amont vers l'aval au sein du carter 10 est indiqué par les flèches en traits discontinus de la figure 1.

Dans cet exemple, les premières buses 18 (ou le jet que chacune d'elles génère) forment chacune un angle α1 compris entre 10° et 50° avec la droite normale à la paroi interne, cet angle α1 étant considéré dans un plan radial. Préférentiellement, les premières buses forment chacune un angle α1 d'environ 20°.

De même, dans cet exemple, les secondes buses 20 (ou le jet que chacune d'elles génère) forment chacune un angle α2 compris entre 30° et 80° avec la droite normale à la paroi interne, cet angle α2 étant considéré dans un plan radial. Préférentiellement, les secondes buses forment chacune un angle α2 d'environ 70°.

Bien entendu, selon une variante, les buses (ou le jet que chacune d'elles génère) peuvent également chacune former un angle avec le plan radial dans lequel sont inscrits leurs orifices afin de former un jet tourbillonnaire autour de la direction axiale X.

Le carter 10 présente également un circuit intégré 24 d'alimentation des buses 18 et 20 en agent nettoyant. Ce circuit 24 comprend une première tuyauterie annulaire 24a alimentant les premières buses 18 et une seconde tuyauterie annulaire 24b alimentant les secondes buses 20 (cf. fig.2). Dans cet exemple, les tuyauteries 24a et 24b sont formées par fonderie lors de la fabrication/fonte du carter. Ces première et seconde tuyauteries 24a et 24b sont indépendantes l'une de l'autre, de manière à pouvoir injecter un agent nettoyant dans le carter 10 avec une première pression via les premières buses 18 et avec une seconde pression différente de la première pression via les secondes buses 20. Les première et seconde tuyauteries 24a et 24b présentent chacune un raccord non représenté pour les raccorder à une alimentation en agent nettoyant. Bien entendu selon une variante, une seule tuyauterie commune alimente les premières et secondes buses, ou bien les tuyauteries 24a et 24b sont connectées.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation ou variantes illustrés/mentionnés peuvent être combinées dans des modes de réalisation additionnels. Par conséquent, la description et les dessins doivent être considérés dans un sens illustratif plutôt que restrictif.

## Revendications

1. Carter d'entrée d'air de turbomachine (10) comprenant une paroi annulaire interne (12) et une paroi annulaire externe (14) délimitant un conduit d'air (16), et au moins deux buses d'injection d'agent nettoyant, une première buse (18) orientée vers la paroi externe (14) tandis qu'une seconde buse (20) orientée vers la paroi interne (12), la première buse (18) étant disposée sur la paroi interne (12), ledit carter (10) étant **caractérisé en ce que** la seconde buse (20) est aussi disposée sur la paroi interne (12).

2. Carter d'entrée d'air (10) selon la revendication 1 comprenant au moins un ensemble de buses (22) comprenant une première buse (18) orientée vers la paroi externe (14) et une seconde buse (20) orientée vers la paroi interne (12), la première buse (18) et la seconde buse (20) de l'ensemble de buses (22) étant disposées dans un même demi-plan radial (DPR1).

3. Carter d'entrée d'air (10) selon la revendication 1 ou 2 comprenant plusieurs premières buses (18) régulièrement réparties azimutalement au sein dudit carter (10) et plusieurs secondes buses (20) régulièrement réparties azimutalement au sein dudit carter (10).

4. Carter d'entrée d'air (10) selon l'une quelconque des revendications 1 à 3, dans lequel la première buse (18) et la seconde buse (20) sont orientées vers l'aval, l'amont et l'aval étant considérés selon le sens du flux au sein du carter d'entrée d'air (10) de l'amont vers l'aval.

5. Carter d'entrée d'air (10) selon l'une quelconque des revendications 1 à 4, dans lequel la première buse (18) est disposée en amont de la seconde buse (20), l'amont et l'aval étant considérés selon le sens du flux au sein du carter d'entrée d'air (10) de l'amont vers l'aval.

6. Carter d'entrée d'air selon l'une quelconque des revendications 1 à 5 formant un carter radial d'entrée d'air (10).

7. Carter d'entrée d'air (10) selon l'une quelconque des revendications 1 à 6, comprenant un circuit d'alimentation (24) en agent nettoyant pour alimenter les buses (18, 20) en agent nettoyant.

8. Turbomachine (100) comprenant un carter d'entrée d'air (10) selon l'une quelconque des revendications 1 à 7.

## Patentansprüche

1. Lufteintrittsgehäuse einer Turbomaschine (10), umfassend eine innere ringförmige Wand (12) und eine äußere ringförmige Wand (14), die eine Luftleitung (16) begrenzen, und mindestens zwei Düsen zum Einleiten von Reinigungsmittel, eine erste Düse (18), die zu der äußeren Wand (14) gerichtet ist, währenddessen eine zweite Düse (20) zu der inneren Wand (12) gerichtet ist, wobei die erste Düse (18) auf der inneren Wand (12) angeordnet ist, wobei das Gehäuse (10) **dadurch gekennzeichnet ist, dass** die zweite Düse (20) ebenfalls auf der inneren Wand (12) angeordnet ist.

2. Lufteintrittsgehäuse (10) nach Anspruch 1, umfassend mindestens eine Düsenanordnung (22), die eine erste Düse (18), die zu der äußeren Wand (14) gerichtet ist, und eine zweite Düse (20), die zu der inneren Wand (12) gerichtet ist, umfasst, wobei die erste Düse (18) und die zweite Düse (20) der Düsenanordnung (22) in derselben radialen Halbebene (DPR1) angeordnet sind.

3. Lufteintrittsgehäuse (10) nach Anspruch 1 oder 2, umfassend mehrere erste Düsen (18), die innerhalb des Gehäuses (10) azimutal gleichmäßig verteilt sind, und mehrere zweite Düsen (20), die innerhalb des Gehäuses (10) azimutal gleichmäßig verteilt sind.

4. Lufteintrittsgehäuse (10) nach einem der Ansprüche 1 bis 3, wobei die erste Düse (18) und die zweite Düse (20) stromabwärts gerichtet sind, wobei stromaufwärts und stromabwärts gemäß der Stromrichtung innerhalb des Lufteintrittsgehäuses (10) von stromaufwärts nach stromabwärts zu verstehen sind.

5. Lufteintrittsgehäuse (10) nach einem der Ansprüche 1 bis 4, wobei die erste Düse (18) stromaufwärts von der zweiten Düse (20) angeordnet ist, wobei stromaufwärts und stromabwärts gemäß der Stromrichtung innerhalb des Lufteintrittsgehäuses (10) von stromaufwärts nach stromabwärts zu verstehen sind.

6. Lufteintrittsgehäuse nach einem der Ansprüche 1 bis 5, das ein radiales Lufteintrittsgehäuse (10) bildet.

7. Lufteintrittsgehäuse (10) nach einem der Ansprüche 1 bis 6, umfassend einen Reinigungsmittel-Versorgungskreis (24) zur Versorgung der Düsen (18, 20) mit Reinigungsmittel.

8. Turbomaschine (100), umfassend ein Lufteintrittsgehäuse (10) nach einem der Ansprüche 1 bis 7.

## Claims

1. A turbomachine air intake casing (10) comprising an inner annular wall (12) and an outer annular wall (14) defining an air passage (16) and at least two cleaning agent injection nozzles, a first nozzle (18) directed towards the outer wall (14) and a second nozzle (20) directed towards the inner wall (12), the first nozzle (18) being arranged on the inner wall (12), said casing (10) being **characterized in that** the second nozzle (20) is also arranged on the inner wall (12).

2. An air intake casing (10) according to claim 1, including at least one set of nozzles (22) comprising a first nozzle (18) directed towards the outer wall (14) and a second nozzle (20) directed towards the inner wall (12), the first nozzle (18) and the second nozzle (20) of the set of nozzles (22) being arranged in a common radial half-plane (DPR1).

3. An air intake casing (10) according to claim 1 or claim 2, having a plurality of first nozzles (18) regularly distributed in azimuth within said casing (10) and a plurality of second nozzles (20) regularly distributed in azimuth within said casing (10).

4. An air intake casing (10) according to any one of claims 1 to 3, wherein the first nozzle (18) and the second nozzle (20) are directed downstream, where upstream and downstream are considered relative to the upstream to downstream flow direction of the stream through the air intake casing (10).

5. An air intake casing (10) according to any one of claims 1 to 4, wherein the first nozzle (18) is arranged upstream from the second nozzle (20), upstream and downstream being considered relative to the upstream to downstream flow direction of the stream through the air intake casing (10).

6. An air intake casing according to any one of claims 1 to 5, forming a radial air intake casing (10).

7. An air intake casing (10) according to any one of claims 1 to 6, including a cleaning agent feed circuit (24) for feeding the nozzles (18, 20) with cleaning agent.

8. A turbomachine (100) including an air intake casing (10) according to any one of claims 1 to 7.
